# EUROPÄISCHE PATENTANMELDUNG

(11) **EP 1 022 528 A2**
(43) Veröffentlichungstag der Anmeldung: **26.07.2000**
(21) Anmeldenummer: 99124411.2
(22) Anmeldetag: 07.12.1999
(51) Int. Cl.: F25D 21/08, F16L 3/08

(54) **Befestigungsvorrichtung**

(30) Priorität: 25.01.1999 DE 19902719
(71) Anmelder: KÜBA KÄLTETECHNIK GmbH, 82065 Baierbrunn (DE)
(72) Erfinder: Handschuh, Roland, 82069 Hohenschäftlarn (DE); Sendef, Johannes, 82377 Penzberg (DE); Meier, Georg, 82377 Penzberg (DE); Wiesinger, Armin, 82393 Iffeldorf (DE)
(74) Vertreter: Manitz, Finsterwald & Partner

(57) **Zusammenfassung**

Die Erfindung betrifft eine Vorrichtung zum Befestigen von ein Kühlblocklamellenpaket (36) durchsetzenden elektrischen Heizstäben (30) an einer Endplatte (34) des Lamellenpakets (36), wobei die Befestigungsvorrichtung einen Materialstreifen mit wenigstens einem Schenkel (10) umfaßt, und wobei an dem einen Ende des Schenkels (10) ein Aufnahmebereich (12) für einen Heizstab (30) und an dem anderen Ende des Schenkels (10) ein Eingriffsabschnitt (14) ausgebildet ist, mit dem die Befestigungsvorrichtung in einer Aussparung (48) der Endplatte (34) verankerbar ist.

## Beschreibung

Die Erfindung betrifft eine Vorrichtung zum Befestigen von ein Kühlblocklamellenpaket durchsetzenden elektrischen Heizstäben an einer Endplatte des Lamellenpakets.

Eine derartige Vorrichtung ist aus der DE-PS-28 44 141 bekannt. Die bekannte Vorrichtung besteht aus zwei separaten Teilen, die zur Befestigung des Heizstabs miteinander verschraubt werden.

Es ist eine Aufgabe der Erfindung, eine Befestigungsvorrichtung der eingangs genannten Art zu schaffen, die eine möglichst einfache und dennoch sichere Befestigung von Heizstäben ermöglicht.

Erfindungsgemäß wird diese Aufgabe im wesentlichen dadurch gelöst, daß die Befestigungsvorrichtung einen Materialstreifen mit wenigstens einem Schenkel umfaßt, wobei an dem einen Ende des Schenkels ein Aufnahmebereich für einen Heizstab und an dem anderen Ende des Schenkels ein Eingriffsabschnitt ausgebildet ist, mit dem die Befestigungsvorrichtung in einer Aussparung der Endplatte verankerbar ist.

Durch die Erfindung wird somit eine auch als Steckklemmschelle bezeichnete Befestigungsvorrichtung geschaffen, die einteilig ausgebildet ist. Ein zu befestigender Heizstab kann bereits zu Beginn des Befestigungsvorgangs in dem an dem einen Ende des Schenkels ausgebildeten Aufnahmebereich angeordnet werden. Nachdem anschließend der am anderen Ende des Schenkels ausgebildete Eingriffsabschnitt mit der Endplatte in Eingriff gebracht worden ist, befindet sich der Heizstab bereits in seiner gewünschten Stellung bezüglich der Endplatte. Durch die Erfindung wird somit eine einfach handhabbare und ein schnelles Befestigen von Heizstäben an Endplatten ermöglichende Befestigungsvorrichtung geschaffen, die es insbesondere gestattet, die endgültige Verankerung der Befestigungsvorrichtung in der Endplatte bei im Aufnahmebereich angeordnetem Heizstab mit lediglich einer Hand durchzuführen.

Gemäß einer bevorzugten Ausführungsform der Erfindung ist der Aufnahmebereich als zumindest im wesentlichen U-förmig gebogener Klemmaufnahmebereich für den Heizstab ausgebildet.

Hierdurch kann die Befestigungsvorrichtung über den zu befestigenden Heizstab geschoben werden, bis dieser im Klemmaufnahmebereich angeordnet ist. In einer derartigen Klemmaufnahme kann der Heizstab besonders sicher gehalten werden, wodurch dessen Befestigung an der Endplatte weiter vereinfacht wird.

Gemäß einem weiteren bevorzugten Ausführungsbeispiel der Erfindung umfaßt der Aufnahmebereich einen im Schenkel ausgebildeten Ausschnitt, der einen Bereich für den Heizstab und einen durch Umbiegen einer Verriegelungslasche versperrbaren Zugangsbereich aufweist.

Hierdurch wird eine besonders einfache Möglichkeit zur Sicherung des Heizstabs in dem Aufnahmebereich der Befestigungsvorrichtung geschaffen, bei der keine zusätzlichen Bauteile erforderlich sind. Des weiteren ist die Befestigungsvorrichtung in einer Flachbauweise ausgeführt, die insbesondere bei beengten Platzverhältnissen von Vorteil sein kann.

Gemäß einer weiteren bevorzugten Ausführungsform der Erfindung ist vorgesehen, daß der Materialstreifen etwa U-förmig gebogen ist und einen zwei Schenkel von etwa gleicher Länge verbindenden Klemmaufnahmebereich für den Heizstab aufweist, wobei die Schenkel in die Verankerungsstellung vorspannbar sind.

Die Befestigungsvorrichtung kann über den zu befestigenden Heizstab geschoben werden, bis dieser im Klemmaufnahmebereich angeordnet ist. Wenn die Schenkel zusammengedrückt werden, können deren Eingriffsabschnitte durch die Aussparung der Endplatte geführt werden. Nach dem Loslassen der dann vorgespannten Schenkel sorgen deren Rückstellkräfte dafür, daß die Eingriffsabschnitte mit dem die Aussparung der Endplatte begrenzenden Material in Eingriff gelangen.

Das Aufschieben der Befestigungsvorrichtung auf den zu befestigenden Heizstab sowie das Zusammendrücken der Schenkel und das anschließende Einführen in die Aussparung der Endplatte kann der Benutzer mit lediglich einer Hand und insbesondere ohne Umgreifen durchführen. Durch diese Ausführungsform der Erfindung wird somit eine denkbar einfache und schnelle Möglichkeit zur Befestigung von Heizstäben an Kühlblocklamellenpaketen geschaffen.

Nach einer weiteren bevorzugten Ausgestaltung der Erfindung verlaufen die Schenkel etwa V-förmig. Dadurch ist ein genügend großer Abstand zwischen den freien Enden der Schenkel sichergestellt, der das Aufschieben auf den Heizstab erleichtert. Außerdem ist die Kraft, mit der sich die Eingriffsabschnitte im verankerten Zustand zurückzustellen suchen, genügend groß, um eine sichere Verankerung der Befestigungsvorrichtung in der Aussparung der Endplatte zu gewährleisten.

Gemäß einer weiteren bevorzugten Ausführungsform sind die Schenkel vor ihrem Übergang in den Klemmaufnahmebereich jeweils nach innen stufenartig abgewinkelt, wobei bevorzugt Übergangsabschnitte der Schenkel etwa V-förmig zumindest näherungsweise parallel zum jeweiligen Schenkel oder unter einem geringfügig größeren Öffnungswinkel als die Schenkel verlaufen.

Dadurch ist der Abstand der Schenkel im vom Klemmaufnahmebereich entfernten Bereich genügend groß, während gleichzeitig der Klemmaufnahmebereich den Heizstab im wesentlichen vollständig umfassen kann, um einen sicheren Halt der Steckklemmschelle auf dem Heizstab zu gewährleisten.

Weitere bevorzugte Ausführungsformen der Erfindung sind in den Unteransprüchen, der Beschreibung sowie den Zeichnungen angegeben.

Die Erfindung wird im folgenden beispielhaft unter Bezugnahme auf die Zeichnung beschrieben; in dieser zeigt:
- Fig. 1: eine Seitenansicht einer Ausführungsform einer erfindungsgemäßen Befestigungsvorrichtung,
- Fig. 2: eine Ansicht eines Teils der Befestigungsvorrichtung von Fig. 1 in Richtung des Pfeils A,
- Fig. 3: eine Ansicht eines Schenkels der Befestigungsvorrichtung von Fig. 2 in Richtung des Pfeils B,
- Fig. 4: eine schematische Seitenansicht eines Teils eines Kühlblocklamellenpakets, an dem ein Heizstab mittels einer erfindungsgemäßen Vorrichtung befestigt ist,
- Fig. 5a und 5b: eine Befestigungsvorrichtung gemäß einer weiteren Ausführungsform der Erfindung bzw. ein Beispiel für eine Aussparung in einer Endplatte eines Kühlblocklamellenpakets,
- Fig. 6: eine Befestigungsvorrichtung gemäß einer weiteren Ausführungsform der Erfindung,
- Fig. 7a: ein Beispiel für die Befestigung eines Heizstabes an einer Endplatte mittels zweier unterschiedlich ausgebildeter Befestigungsvorrichtungen gemäß der Erfindung,
- Fig. 7b: einen Schnitt entlang der Linien A-A in Fig. 7a, und
- Fig. 8a und 8b: eine Befestigungsvorrichtung gemäß einer weiteren Ausführungsform der Erfindung in zwei verschiedenen Zuständen.

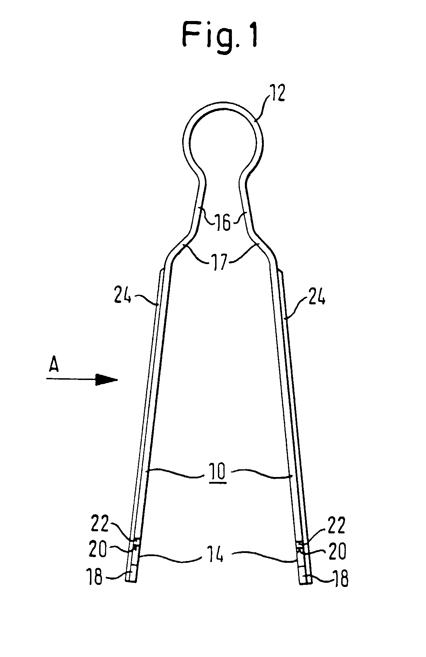

Die erfindungsgemäße einteilige Befestigungsvorrichtung gemäß den Fig. 1, 2 und 3 ist vorzugsweise aus Federstahl hergestellt und umfaßt einen gebogenen Materialstreifen, der einen Klemmaufnahmebereich 12 für einen zu befestigenden Heizstab sowie zwei Schenkel 10 aufweist, die durch den Klemmaufnahmebereich 12 miteinander verbunden sind.

Die Schenkel 10 sind vorspannbar ausgebildet, und zwar beispielsweise derart, daß in der Biegefertigung eine Kraft von etwa 600N erforderlich ist, wobei bevorzugt die Stärke des streifenförmigen Ausgangsmaterials etwa 1,0 oder 1,5mm beträgt.

Der Klemmaufnahmebereich 12 hat etwa die Form eines einseitig offenen Zylinders, dessen Durchmesser bevorzugt derart an die Form des zu befestigenden Heizstabs angepaßt ist, daß dieser im verankerten Zustand fest im Klemmaufnahmebereich 12 eingespannt ist.

An den Klemmaufnahmebereich 12 schließen sich zwei gerade, V-förmig verlaufende Übergangsabschnitte 16 an, deren kleinster Abstand, welcher der Breite der offenen Seite des Klemmaufnahmebereichs 12 entspricht, kleiner als der Durchmesser des Klemmaufnahmbereichs ist.

Am vom Klemmaufnahmebereich 12 entfernten Ende der Übergangsabschnitte 16 vergrößert sich der Abstand der Schenkel 10 sprungartig durch das Vorsehen von Stufen 17, die durch zweifaches Abwinkeln des jeweiligen Schenkels 10 hergestellt sind. Von den Stufen 17 an sind die Schenkel 10 wiederum gerade ausgebildet und weisen einen V-förmigen Verlauf auf.

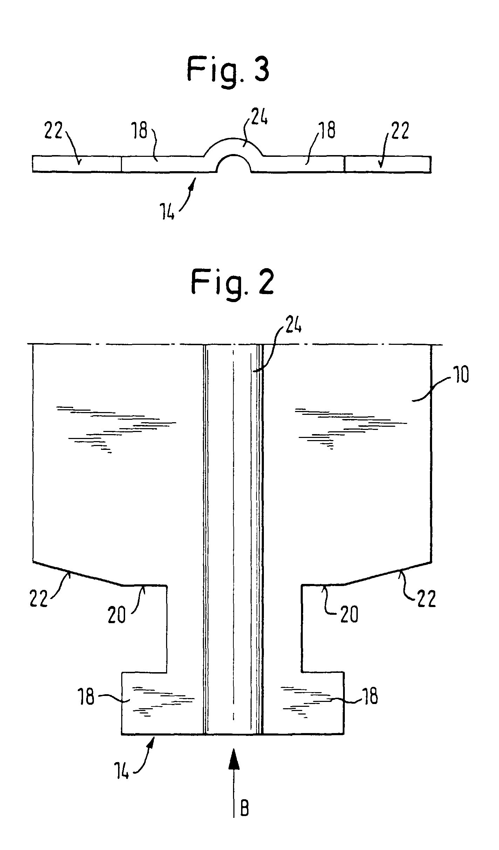

An den freien Enden der Schenkel 10 sind Eingriffsabschnitte 14 ausgebildet, wobei die Schenkel 10 jeweils in einen gemäß Fig. 2 etwa quadratischen Fortsatz reduzierter Breite übergehen, an dem zwei Einhaknasen 18 ausgebildet sind. Die den Einhaknasen 18 gegenüberliegende Stützfläche 20 des Eingriffsabschnitts 14 ist jeweils mit einer Abschrägung 22 versehen.

Die Schenkel 10 sind jeweils mit einer in Längsrichtung verlaufenden, etwa mittig angeordneten Versteifungssicke 24 versehen, die sich jeweils vom freien Ende des Schenkels 10 bis kurz vor die Stufe 17 erstreckt.

Die Fig. 2 und 3 zeigen die Eingriffsabschnitte 14 der Befestigungsvorrichtung von Fig. 1.

Die beiden jeweils an einem Schenkel 10 ausgebildeten Eingriffsabschnitte 14, von denen in Fig. 2 und 3 jeweils nur einer dargestellt ist, sind identisch ausgeführt. Jeder Eingriffsabschnitt 14 ist mit zwei Einhaknasen 18 versehen, die entgegengesetzt gerichtet sind und sich senkrecht zu der Versteifungssicke 24 erstrecken. Folglich sind die Eingriffsabschnitte 14 jeweils T-förmig ausgebildet, wobei die Einhaknasen 18 jeweils die freien Enden des Querbalkens des T bilden.

In Fig. 2 sind die Abschrägungen 22 zu erkennen, mit denen die den Einhaknasen 18 gegenüberliegenden Stützflächen 20 des Eingriffsabschnitts 14 versehen sind. Der Abstand zwischen den Einhaknasen 18 und der ihnen jeweils gegenüberliegenden Stützfläche 20 ist bevorzugt etwa gleich oder geringfügig größer als die Wandstärke der jeweiligen Endplatte, an welcher der jeweilige Heizstab mittels der erfindungsgemäßen Steckklemmschelle befestigt werden soll.

In Fig. 3 ist insbesondere die etwa halbkreisförmig ausgebildete Versteifungssicke 24 zu erkennen.

Zur Befestigung eines Heizstabs an der Endplatte eines Lamellenpaketes mittels der Steckklemmschelle gemäß den Fig. 1, 2 und 3 werden nach dem Zusammendrücken der Schenkel 10 die Eingriffsabschnitte 14 derart durch die jeweilige Aussparung in der Endplatte geführt, daß jeweils beide Einhaknasen 18 eines Eingriffsabschnitts 14 den die Aussparung begrenzenden Bereich der Endplatte hintergreifen. Das Einführen oder Einhängen der Eingriffsabschnitte 14 mittels der Einhaknasen 18 wird dabei durch die Abschrägungen 22 erleichtert.

Nach dem Loslassen der Schenkel 10 dringen infolge deren Aufspreizung die Kanten der Eingriffsabschnitte 14 unter Ausbildung von Kerbstellen in das Material der Endplatte ein. Auf diese Weise wird eine feste und dauerhafte Verankerung der Steckklemmschelle in der Endplatte geschaffen, die eine entsprechend sichere Fixierung des jeweiligen Heizstabs sicherstellt.

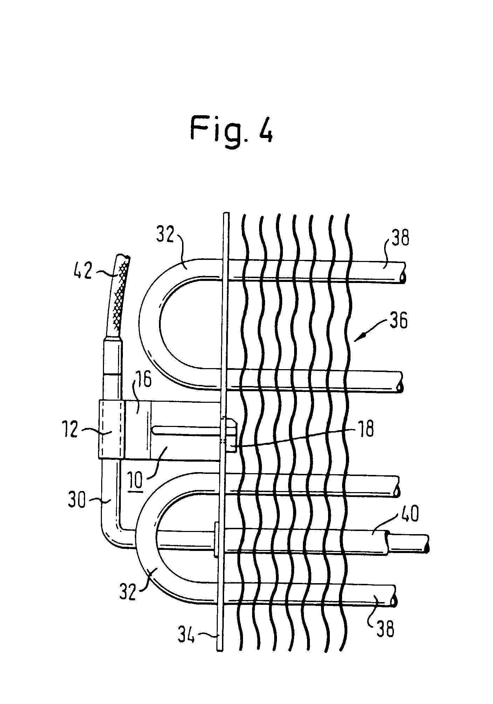

In Fig. 4 ist mit dem Bezugszeichen 36 allgemein ein Lamellenpaket bezeichnet, das von Kühlrohren 38 durchzogen ist. Die Kühlrohre 38 sind außerhalb von das Lamellenpaket seitlich begrenzenden Endplatten 34 durch Rundbögen 32 miteinander verbunden.

Parallel zu den Kühlrohren 38 erstrecken sich durch das Lamellenpaket 36 mehrere Rohrbüchsen 40, von denen in Fig. 4 nur eine gezeigt ist. Diese Rohrbüchsen 40 dienen zur Aufnahme von Heizstäben 30, die über eine flexible Anschlußleitung 42 an eine Stromquelle anschließbar sind.

Der Heizstab 30 ist im Klemmaufnahmebereich 12 einer gemäß der Erfindung ausgebildeten Steckklemmschelle angeordnet, die mit Ausnahme der nachstehend erwähnten Unterschiede prinzipiell der vorstehend erläuterten Ausführungsform entspricht und die mit ihren Eingriffsabschnitten in einer Aussparung der Endplatte 34 spreizverankert ist. Der Aufspreizeffekt wird durch die Vorspannung der Schenkel 10 erzielt, die gemäß Fig. 4 kürzer als die Schenkel 10 der in den Fig. 1, 2 und 3 dargestellten Ausführungsform sind. Ein weiterer Unterschied besteht darin, daß jeder Schenkel 10 nur mit lediglich einer Einhaknase 18 versehen ist. Die beiden Einhaknasen 18 der Steckklemmschelle sind entgegengesetzt gerichtet, d. h. die Einhaknase des anderen, in Fig. 4 nicht erkennbaren Schenkels weist bei Orientierung gemäß Fig. 4 nach oben.

Die Länge der Steckklemmschelle gemäß Fig. 4 ist derart gewählt, daß der Klemmaufnahmebereich 12 vollständig außerhalb der Kühlrohrbögen 32 gelegen ist.

Zur Befestigung des Heizstabs 30 an der Endplatte 34 wird die Steckklemmschelle gemäß der Ausführungsform von Fig. 4 zunächst über den Heizstab 30 geschoben. Anschließend werden die Schenkel 10 entgegen ihren Rückstellkräften zusammengedrückt, um die Eingriffsabschnitte durch die Aussparung in der Endplatte 34 derart führen zu können, daß die Einhaknasen 18 den die Aussparung begrenzenden Bereich der Endplatte 34 hintergreifen.

Wenn sich die Eingriffsabschnitte in der gewünschten Position befinden, läßt der Benutzer die Schenkel 10 los, die sich daraufhin spreizen und mit den Kanten ihrer Eingriffsabschnitte unter Ausbildung von - im Fall z.B. einer kreisförmigen Aussparung vier - Kerbstellen in das vorzugsweise aus Aluminium bestehende Material der Endplatte 34 eindringen.

Dadurch wird eine feste und dauerhafte Verankerung der Steckklemmschelle in der Endplatte 34 geschaffen, die auch bei starken Temperaturschwankungen stabil ist und einen einwandfreien sowie verwacklungsfreien Sitz der Steckklemmschelle - und damit eine entsprechend sichere Fixierung des jeweiligen Heizstabs 30 - sicherstellt.

Der Heizstab 30 wird vor oder nach der endgültigen Spreizverankerung durch die von den Übergangsabschnitten 16 gebildete Verengung hindurch in den Klemmaufnahmebereich 12 gedrückt, d. h. die erfindungsgemäße Steckklemmschelle wird auf den Heizstab 30 aufgeklipst, so daß sie bereits im unverankerten Zustand unverlierbar mit dem Heizstab 30 verbunden werden kann.

Die Erfindung ermöglicht folglich eine einfache und schnelle Befestigung von Heizstäben, die von einem Benutzer mit nur einer Hand und insbesondere ohne Umgreifen bewerkstelligt werden kann. Durch die einteilige Ausführung der erfindungsgemäßen Befestigungsvorrichtung entfallen zeitraubende Vormontageschritte bzw. ein nachträgliches Fixieren z.B. durch Verschrauben mehrerer Einzelteile.

Ebenso einfach kann die erfindungsgemäße Steckklemmschelle auch wieder gelöst werden, z. B. zum Auswechseln eines Heizstabs, indem der Benutzer mit einer Hand die Schenkel zusammendrückt, die Eingriffsabschnitte aus der Aussparung der Endplatte herauszieht und schließlich die Steckklemmschelle vom Heizstab abzieht.

Ein weiterer Vorteil der erfindungsgemäßen Befestigungsvorrichtung besteht darin, daß sie bei Verwendung gelochter Endplatten grundsätzlich an einer beliebigen Stelle des Heizstabs angebracht werden kann, wodurch eine weitgehende Freiheit in der Wahl der Befestigungsstelle erzielt wird, die insbesondere eine Berücksichtigung des Verlaufs der Kühlrohrbögen ermöglicht.

Im folgenden werden weitere Ausführungsformen der erfindungsgemäßen Befestigungsvorrichtung erläutert.

Fig. 5a zeigt eine Ausführungsform einer erfindungsgemäßen Befestigungsvorrichtung, die einen etwa U-förmig gebogenen Klemmaufnahmebereich 12 für einen Heizstab (nicht dargestellt) aufweist. Die einteilige Befestigungsvorrichtung weist einen kurzen Schenkel 11 sowie einen langen Schenkel 10 auf, der im wesentlichen den Schenkeln der anhand der Fig. 1 bis 3 beschriebenen Ausführungsform der Befestigungsvorrichtung entspricht.

Der lange Schenkel 10 ist mit einem Eingriffsabschnitt 14 versehen, der zwei sich in entgegengesetzte Richtungen und senkrecht zur Längsachse des Schenkels 10 erstreckende Einhaknasen 18 umfaßt. Der Zwischenraum zwischen den Einhaknasen 18 und den gegenüberliegenden Stützflächen 20 entspricht etwa der Dicke der Endplatte, an der die Befestigungsvorrichtung zum Befestigen eines Heizstabs verankert werden kann.

Der lange Schenkel 10 ist außerdem mit einer Versteifungssicke 24 versehen, die sich vom Klemmaufnahmebereich 12 bis etwa in die Mitte des Schenkels 10 parallel zu dessen Längsachse erstreckt.

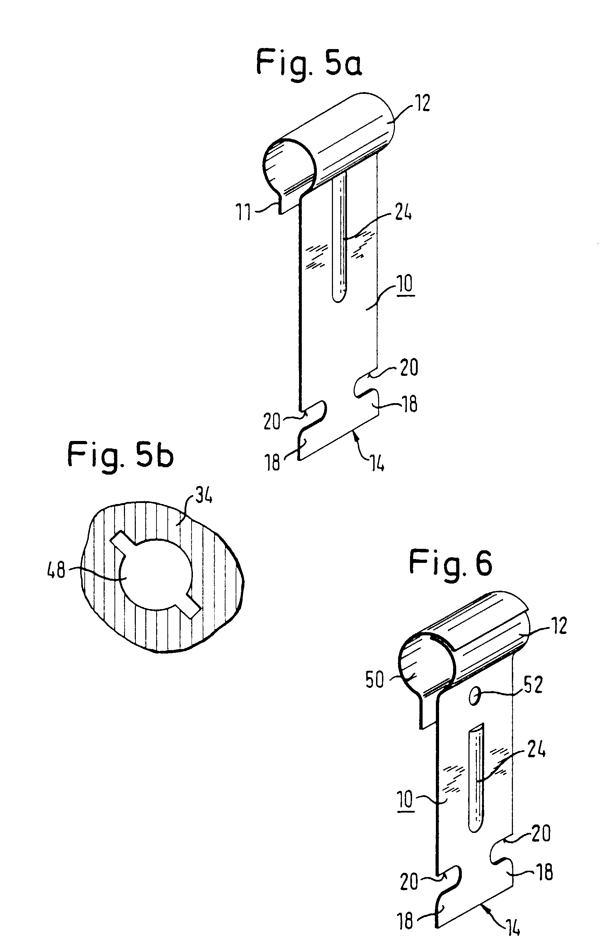

In Fig. 5b ist ein Beispiel für die Form einer Aussparung 48 gezeigt, die in einer nur teilweise angedeuteten Endplatte 34 ausgebildet und in der die Befestigungsvorrichtung gemäß Fig. 5a verankerbar ist. Die Aussparung 48 stellt eine Kombination aus einer kreisförmigen und einer schlitzförmigen Aussparung dar. Die Verankerung der Befestigungsvorrichtung und somit die Befestigung eines Heizstabes an der Endplatte 34 erfolgt dadurch, daß die Befestigungsvorrichtung mit ihrem Eingriffsabschnitt 14 durch den schlitzförmigen Bereich der Aussparung 48 gesteckt und anschließend um einen Winkel von z. B. 45° gedreht wird, wodurch das den kreisförmigen Bereich der Aussparung 48 begrenzende Material der Endplatte 34 zwischen die Einhaknasen 18 und die Stützflächen 20 gelangt und die Befestigungsvorrichtung nicht mehr von selbst außer Eingriff mit der Endplatte 34 geraten kann.

Vor der Verankerung der Befestigungsvorrichtung an der Endplatte 34 wird der Heizstab im Klemmaufnahmebereich 12 angeordnet, indem die Befestigungsvorrichtung auf den Heizstab aufgeklipst wird.

Die Ausführungsform der erfindungsgemäßen Befestigungsvorrichtung gemäß Fig. 6 unterscheidet sich von derjenigen der Fig. 5a dadurch, daß der Aufnahmebereich 12 einen kleineren Winkelbereich abdeckt und ein seitliches Aufstecken auf einen zu befestigenden Heizstab ermöglicht. Die einteilige Befestigungsvorrichtung gemäß Fig. 6 gestattet ebenfalls eine Fixierung des Heizstabs sowohl während der Verankerung an der Endplatte 34 als auch im endgültig montierten Zustand.

Der Heizstab kann in dem Aufnahmebereich 12 der Befestigungsvorrichtung zusätzlich durch eine Schelle 50 gesichert werden, die mit der Befestigungsvorrichtung beispielsweise durch Verschrauben verbunden werden kann. Hierzu ist in dem Schenkel 10 der Befestigungsvorrichtung zwischen dem Aufnahmebereich 12 und einer Versteifungssicke 24 eine Bohrung 52 vorgesehen, durch die ein Verbindungselement gesteckt werden kann.

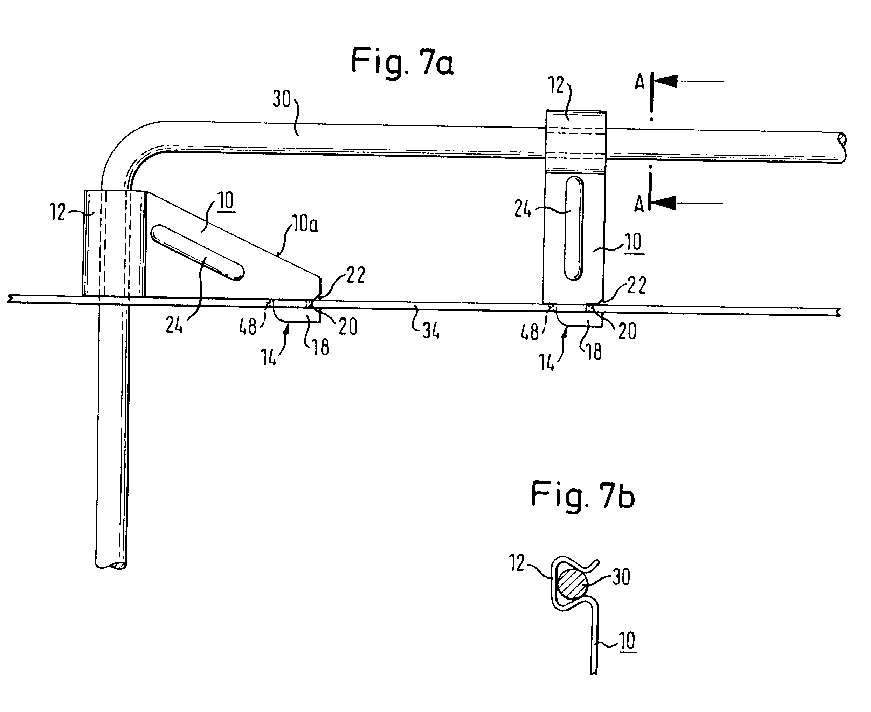

Fig. 7a zeigt ein Beispiel für die Befestigung eines einen 90°-Winkel aufweisenden Heizstabes 30 an einer Endplatte 34 mittels zweier unterschiedlich ausgebildeter erfindungsgemäßer Befestigungsvorrichtungen.

Die im linken Bereich von Fig. 7a dargestellte Befestigungsvorrichtung dient dazu, einen sich senkrecht zu der durch die Endplatte 34 definierten Ebene verlaufenden Abschnitt des Heizstabes 30 zu fixieren. Hierzu weist der Eingriffsabschnitt 14 des mit einer Abschrägung 10a versehenen Schenkels 10 eine Einhaknase 18 auf, die sich parallel zu einer Längsachse des Schenkels 10 und somit senkrecht zu dem betreffenden Abschnitt des Heizstabes 30 erstreckt.

Die im rechten Bereich der Fig. 7a dargestellte Befestigungsvorrichtung dient zur Fixierung eines sich parallel zu der durch die Endplatte 34 definierten Ebene erstreckenden Abschnitts des Heizstabes 30. Der Eingriffsabschnitt 14 der Befestigungsvorrichtung ist mit einer sich senkrecht zur Längsachse des Schenkels 10 und somit parallel zu dem betreffenden Abschnitt des Heizstabes 30 erstreckenden Einhaknase 18 versehen.

Die Randbereiche der Endplatte 34, die jeweils die Aussparung 48, in welcher die Befestigungsvorrichtungen mit ihren Eingriffsabschnitten 14 jeweils verankert sind, begrenzen, sind jeweils zwischen der Einhaknase 18 und einer mit einer Abschrägung 22 versehenen Stützfläche 20 angeordnet. Die Schenkel 10 der Befestigungsvorrichtungen sind des weiteren mit einer Versteifungssicke 24 versehen, die sich bei der in Fig. 7a linken Befestigungsvorrichtung schräg und bei der anderen Befestigungsvorrichtung parallel zur Längsachse des Schenkels 10 erstreckt.

Aus der für beide Befestigungsvorrichtungen von Fig. 7a zutreffenden Schnittdarstellung von Fig. 7b ist zu erkennen, daß jeweils nur ein einziger Schenkel 10 vorgesehen ist, an dessen einem - nicht dargestellten - Ende der Eingriffsabschnitt 14 und an dessen anderem Ende der Klemmaufnahmebereich 12 zur Aufnahme des Heizstabes 30 ausgebildet ist. Die erfindungsgemäßen Befestigungsvorrichtungen können somit seitlich auf den Heizstab 30 aufgesteckt bzw. aufgeklipst werden.

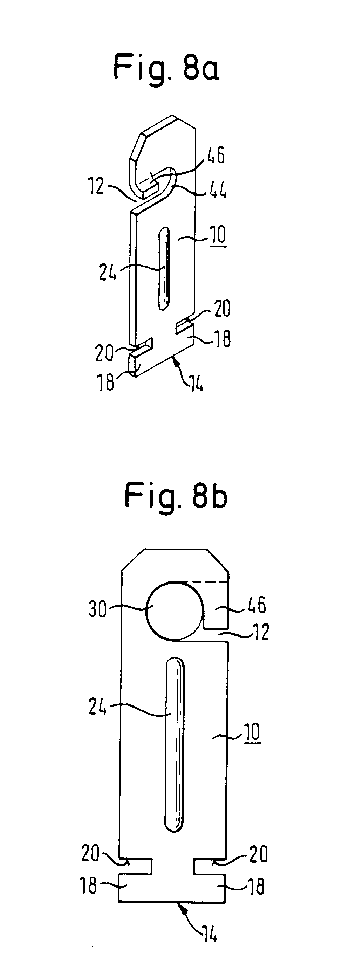

In der in den Fig. 8a und 8b dargestellten Ausführungsform einer erfindungsgemäßen Befestigungsvorrichtung ist der Aufnahmebereich 12 in Form eines im Endbereich des Schenkels 10 ausgebildeten Ausschnitts 44 vorgesehen. Wie insbesondere aus Fig. 8b hervorgeht, ist ein für den Heizstab 30 vorgesehener Bereich des Aufnahmebereiches 12 an die Form des einen kreisförmigen Querschnitt aufweisenden Heizstabes 30 angepaßt.

Des weiteren ist die Befestigungsvorrichtung mit einer Verriegelungslasche 46 versehen, die mit einem Werkzeug, beispielsweise einer Zange, zwischen der offenen Stellung gemäß Fig. 8a und einer verriegelten Stellung gemäß Fig. 8b bewegt werden kann. In der Verriegelungsstellung gemäß Fig. 8b ist ein Zugangsbereich des Aufnahmebereiches 12 durch die Verriegelungslasche 46 blockiert, so daß die Befestigungsvorrichtung verliersicher mit dem Heizstab 30 verbunden ist.

Ein Vorteil der einteiligen Steckklemmschelle gemäß Fig. 8a und Fig. 8b besteht darin, daß sie sich lediglich in einer einzigen Ebene erstreckt.

Zur Anpassung an den jeweiligen Einsatzzweck kann die erfindungsgemäße Befestigungsvorrichtung grundsätzlich jede beliebige Kombination von Klemmaufnahmebereich und Eingriffsabschnitt(en) aufweisen. Jeder der vorstehend erläuterten Aufnahmebereiche 12 kann somit grundsätzlich mit einem oder mit zwei Schenkeln 10 versehen sein, wobei an dem Schenkel 10 bzw. an den Schenkeln 10 prinzipiell jeder der vorstehend beschriebenen Eingriffsabschnitte 14 ausgebildet sein kann.

### Bezugszeichenliste

- 10, 11: Schenkel
- 10a: Abschrägung
- 12: Aufnahmebereich
- 14: Eingriffsabschnitt
- 16: Übergangsabschnitte
- 17: Stufen
- 18: Einhaknasen
- 20: Stützfläche
- 22: Abschrägung
- 24: Versteifungssicken
- 30: Heizstab
- 32: Kühlrohrbögen
- 34: Endplatte
- 36: Lamellenpaket
- 38: Kühlrohre
- 40: Rohrbüchse
- 42: Anschlußleitung
- 44: Ausschnitt
- 46: Verriegelungslasche
- 48: Aussparung
- 50: Schelle
- 52: Bohrung

## Patentansprüche

1. Vorrichtung zum Befestigen von ein Kühlblocklamellenpaket (36) durchsetzenden elektrischen Heizstäben (30) an einer Endplatte (34) des Lamellenpakets (36),
dadurch **gekennzeichnet,**
daß die Befestigungsvorrichtung einen Materialstreifen mit wenigstens einem Schenkel (10) umfaßt, wobei an dem einen Ende des Schenkels (10) ein Aufnahmebereich (12) für einen Heizstab (30) und an dem anderen Ende des Schenkels (10) ein Eingriffsabschnitt (14) ausgebildet ist, mit dem die Befestigungsvorrichtung in einer Aussparung (48) der Endplatte (34) verankerbar ist.

2. Befestigungsvorrichtung nach Anspruch 1,
dadurch **gekennzeichnet,**
daß der Aufnahmebereich als zumindest im wesentlichen U-förmig gebogener Klemmaufnahmebereich (12) für den Heizstab (30) ausgebildet ist, wobei insbesondere durch den Klemmaufnahmebereich (12) ein kurzer Schenkel (11) und ein langer Schenkel (10) verbunden sind, wobei der Eingriffsabschnitt (14) an dem langen Schenkel (10) ausgebildet ist.

3. Befestigungsvorrichtung nach Anspruch 1 oder 2,
dadurch **gekennzeichnet,**
daß der Heizstab (30) im Aufnahmebereich (12) durch eine Schelle (50) sicherbar ist, die mit der Befestigungsvorrichtung lösbar verbindbar, insbesondere verschraubbar ist.

4. Befestigungsvorrichtung nach Anspruch 1,
dadurch **gekennzeichnet,**
daß der Aufnahmebereich (12) einen im Schenkel (10) ausgebildeten Ausschnitt (44) umfaßt, der bevorzugt einen Bereich für den Heizstab (30) und einen insbesondere durch Umbiegen einer Verriegelungslasche (46) versperrbaren Zugangsbereich aufweist.

5. Befestigungsvorrichtung nach zumindest einem der vorhergehenden Ansprüche,
dadurch **gekennzeichnet,**
daß sie durch Einführen des Eingriffsabschnitts (14) in die bevorzugt als Kombination aus einer kreisförmigen und einer schlitzförmigen Aussparung vorgesehene Aussparung (48) der Endplatte (34) und durch Verdrehen des Eingriffsabschnitts (14) relativ zu der Endplatte (34) verankerbar ist.

6. Befestigungsvorrichtung nach Anspruch 1 oder 2,
dadurch **gekennzeichnet,**
daß der Materialstreifen etwa U-förmig gebogen ist und einen zwei Schenkel (10) von etwa gleicher Länge verbindenden Klemmaufnahmebereich (12) für den Heizstab (30) aufweist, wobei die Schenkel (10) in die Verankerungsstellung vorspannbar sind.

7. Befestigungsvorrichtung nach Anspruch 6,
dadurch **gekennzeichnet,**
daß die Schenkel (10) etwa V-förmig verlaufen, und/oder daß die Schenkel (10) vor ihrem Übergang in den Klemmaufnahmebereich (12) jeweils wenigstens einmal abgewinkelt sind, und/oder daß die Schenkel (10) vor ihrem Übergang in den Klemmaufnahmebereich (12) jeweils nach innen stufenartig abgewinkelt sind, wobei bevorzugt Übergangsabschnitte (16) der Schenkel (10) etwa V-förmig zumindest näherungsweise parallel zum jeweiligen Schenkel (10) oder unter einem geringfügig größeren Öffnungswinkel als die Schenkel (10) verlaufen, wobei insbesondere der kleinste Abstand zwischen den Übergangsabschnitten (16) kleiner als der Durchmesser des Klemmaufnahmebereichs (12), insbesondere des Heizstabs (30) ist.

8. Befestigungsvorrichtung nach zumindest einem der vorhergehenden Ansprüche,
dadurch **gekennzeichnet,**
daß der Aufnahmebereich (12) der Form des Heizstabs (30) angepaßt ist.

9. Befestigungsvorrichtung nach zumindest einem der vorhergehenden Ansprüche,
dadurch **gekennzeichnet,**
daß der Eingriffsabschnitt (14) des Schenkels (10) mit wenigstens einer Einhaknase (18) versehen ist, wobei insbesondere die Einhaknase (18) sich etwa parallel zu einer Längsachse des Schenkels (10) erstreckt.

10. Befestigungsvorrichtung nach Anspruch 9,
dadurch **gekennzeichnet,**
daß der Eingriffsabschnitt (14) mit zwei Einhaknasen (18) versehen ist, die sich bevorzugt in etwa entgegengesetzte Richtungen und jeweils etwa senkrecht zu einer Längsachse des Schenkels (10) erstrecken, und/oder daß der Abstand zwischen der Einhaknase (18) und einer ihr gegenüberliegenden Stützfläche (20) des Eingriffsabschnitts (14) jeweils im wesentlichen gleich oder geringfügig größer als die Wandstärke der Endplatte (34) ist, und/oder daß die einer Einhaknase (18) gegenüberliegende Stützfläche (20) mit einer Abschrägung (22) versehen ist.

11. Befestigungsvorrichtung nach zumindest einem der vorhergehenden Ansprüche,
dadurch **gekennzeichnet,**
daß jeder Schenkel (10) zumindest bereichsweise mit wenigstens einer bevorzugt in Längsrichtung verlaufenden Versteifungssicke (24) versehen ist, und/oder daß die Befestigungsvorrichtung aus Federstahl hergestellt ist, und/oder daß die Länge der Befestigungsvorrichtung größer ist als der Überstand von Kühlrohrbögen (32) über die Endplatte (34), wobei bevorzugt im verankerten Zustand zumindest der Klemmaufnahmebereich (12) außerhalb der Kühlrohrbögen (32) gelegen ist.
